**Europäisches Patentamt**

**European Patent Office**

**Office européen des brevets**

(19)

(11) Numéro de publication: **0 024 065**
**B1**

(12) ## FASCICULE DE BREVET EUROPEEN

(45) Date de publication du fascicule du brevet: **08.08.84**

(51) Int. Cl.³: **C 21 B 3/06** //C04B7/14

(21) Numéro de dépôt: **80200760.9**

(22) Date de dépôt: **12.08.80**

(54) Perfectionnements aux procédés pour valoriser les scories métallurgiques non phosphoreuses.

(30) Priorité: **14.08.79 BE 46914**
**14.08.79 BE 46913**

(43) Date de publication de la demande:
**18.02.81 Bulletin 81/7**

(45) Mention de la délivrance du brevet:
**08.08.84 Bulletin 84/32**

(84) Etats contractants désignés:
**AT DE FR GB IT LU NL**

(56) Documents cités:
**BE - A - 856 711**
**BE - A - 867 392**
**FR - A - 2 172 206**
**FR - A - 2 260 542**
**FR - A - 2 355 785**
**FR - A - 2 370 006**

(73) Titulaire: **Centre de Recherches Metallurgiques Centrum voor research in de metallurgie A.s.b.l. - V.z.w.**
**Abbaye du Val-Benoît 11, rue Ernest Solvay**
**B-4000 Liège (BE)**

(72) Inventeur: **Piret, Jacques**
**61, Quai de Rome**
**B-4000 Liege (BE)**

(74) Mandataire: **Pirmolin, Guy Jean**
**CENTRE DE RECHERCHES METALLURGIQUES**
**11, rue Ernest Solvay**
**B-4000 Liège (BE)**

Courier Press, Leamington Spa, England.

## Description

La présente invention se rapporte à des perfectionnements aux procédés pour valoriser les scories métallurgiques non phosphoreuses provenant de l'élaboration de l'acier.

Les scories métallurgiques produites par l'affinage pneumatique d'une fonte non phosphoreuse ne trouvent, actuellement, que des débouchés limités.

Ces débouchés sont essentiellement, soit l'agriculture où, à cause de leur teneur importante en CaO, ces scories sont utilisées, quoiqu'en faibles quantités, pour amender la terre, soit l'introduction dans la charge des hauts fourneaux, comme fondant et porteur de fer, mais en quantités limitées, à cause de la présence d'impuretés gênantes (phosphore, alcalis) contenues dans ces scories. On utilise également ces scories pour la construction des routes, mais des difficultés surviennent quand la teneur en chaux de ces scories est trop élevée (gonflement). Le surplus important de scories non utilisées est en général mis en terril, solution qui présente, entre autres inconvénients, celui de nécessiter des dépenses en pure perte, puisque le matériau est considéré comme irrécupérable.

Par le brevet belge BE—A—856.711, on connaît un procédé de valorisation de ces scories, dans lequel on ajoute aux scories liquides, dans une première phase, des porteurs d'alumine et de silice (centres volantes de centrales thermiques, éventuellement du laitier de haut fourneau, de préférence liquide), et dans une seconde phase un réducteur suffisamment énergique pour réduire la majeure partie du FeO et du MnO à l'état métallique. On chauffe en atmosphère très réductrice et on extrait le métal réduit après décantation puis, dans une troisième phase, on ajoute de la chaux finement divisée pour terminer l'opération et transformer ainsi les scories liquides en liant hydraulique.

Les résultats obtenus de cette façon se sont révélés satisfaisants, mais cependant certaines difficultés se présentent encore par fois dans les réactions entre les scories et les substances ajoutées, les dites réactions ne se produisant pas toujours avec la même intensité, notamment à cause des variations dans les compositions des substances en présence.

Une des difficultés rencontrées est d'obtenir une production continue de scories valorisées, c'est-à-dire, dans le cas présent, de scories présentant une composition analogue à celle des ciments Portland.

La présente invention a pour objet un procédé grâce auquel on peut remédier facilement aux inconvénients signalés ci-dessus, et notamment assurer une production continue de scories valorisées.

Le procédé qui fait l'objet de la présente invention, destiné à valoriser les scories basiques provenant de l'affinage à l'oxygène de fonte non phosphoreuse et dans lequel on ajoute aux dites scories des porteurs d'alumine et de silice, ainsi que des éléments réducteurs, de préférence du carbone, tout en chauffant les dites scories au moyen d'un arc électrique, afin d'assurer la réduction des oxydes métalliques qu'elles contiennent, est essentiellement caractérisé en ce que l'on assure l'écoulement continu des dites scories suivant une trajectoire prédéterminée, en ce que l'on répète au moins une fois, en des zones successives de la dite trajectoire, les dites opérations d'addition de porteurs d'alumine et de silice, d'addition d'éléments réducteurs, ainsi que de chauffage et réduction, en ce qu'après la dernière opération d'addition, chauffage et réduction, on assure la décantation des métaux réduits et en ce que l'on recueille en continu les dites scories à la sortie de la dite trajectoire.

Selon une mise en oeuvre particulièrement intéressante du procédé de l'invention, on ajoute aux dites scories recueillies en continu des porteurs de chaux en quantité telle que le mélange obtenu présente une teneur en chaux comprise entre 60% et 70%.

Ainsi qu'on le comprend, la mise en oeuvre de ce procédé implique l'utilisation d'un récipient approprié.

On connaît déjà, par le brevet belge BE—A—867.392, un dispositif destiné à permettre la valorisation de scories métallurgiques provenant de l'affinage de fontes non phosphoreuses. Ce dispositif connu se compose d'une part d'un four à axe vertical équipé d'un système de chauffage des scories et de moyens d'apport de chaux et d'éléments réducteurs au bain de scories, et d'autre part d'un four rotatif sensiblement horizontal disposé à l'aval du four vertical et équipé de moyens de chauffage des scories.

Ce dispositif connu ne permet cependant pas de réaliser la trajectoire des scories requises par le procédé de l'invention, ni d'effectuer successivement plusieurs cycles d'opérations identiques d'addition de substances et de réduction.

La présente invention porte dès lors également sur un dispositif dont la configuration assure aux scories une trajectoire au cours de laquelle elles se modifient en composition, jusqu'au moment où elles pénètrent dans une dernière chambre d'où elles sont soutirées en continu. Cette configuration peut avoir une forme quelconque, mais on donne la préférence à une trajectoire soit rectiligne soit circulaire.

A cet effet, le dispositif pour la mise en oeuvre du procédé de l'invention, qui comporte un récipient métallurgique équipé de moyens d'apport de porteurs d'alumine et de silica, de moyens d'apport d'éléments réducteurs et de moyens de chauffage des scories à l'aide d'un arc électrique, est essentiellement caractérisé en ce que le dit récipient est subdivisé en au moins trois chambres traversées successivement par les dites scories en écoulement continu, en ce que les parois séparant deux chambres successives sont pourvues de moyens permettant l'écoulement des scories d'une chambre vers la suivante, en ce que chacune de ces chambres, à l'exception de la dernière dans le sens d'écoulement des scories, est équipés des dits moyens d'apport de porteurs d'alumine et de silice, d'éléments réducteurs, ainsi que des dits moyens de chauffage, en ce que la première chambre est en outre équipée de moyens d'introduction de scories dans le dit récipient, en ce qu'au moins une des dites chambres, à l'exception de la dernière dans le sens d'écoulement des scories, est équipée de moyens permettant l'évacuation des métaux réduits ayant décanté, et en ce que la dernière chambre est équipée de moyens permettant de soutirer en continu les dites scories.

Selon une réalisation avantageuse, le dispositif de l'invention comporte en outre un four Trommel, faiblement incliné sur l'horizontale, et dont l'orifice d'entrée est disposé en contrebas des dits moyens de soutirage des dites scories, le dit four Trommel étant en outre équipé de moyens de chauffage des matières qu'il peut contenir.

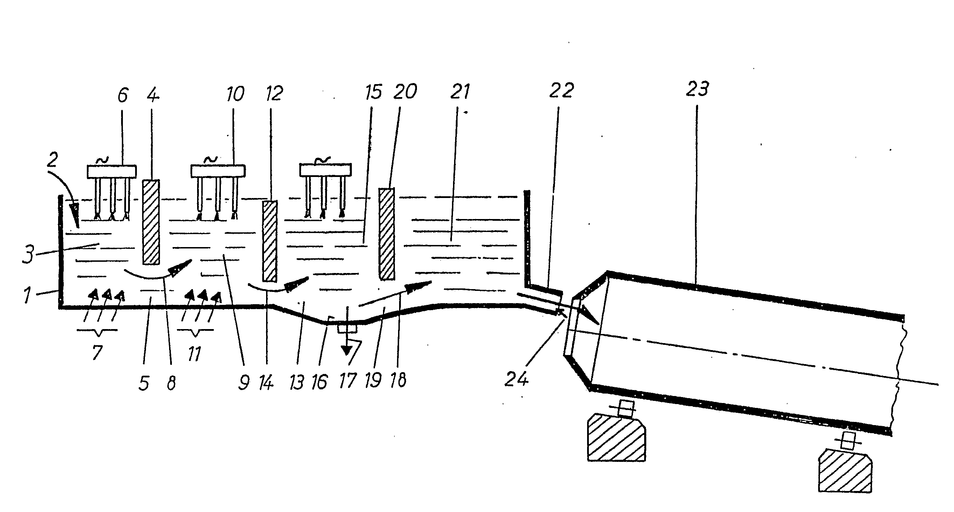

La figure annexée, donnée à titre d'exemple non limitatif et non à l'échelle, montre une façon de réaliser un dispositif apte à la mise en oeuvre du procédé de l'invention. Elle illustre un récipient de type rectiligne, représenté en coupe verticale longitudinale.

Sur cette figure, le récipient 1, dont on n'a rien représenté de la partie couvrante, est alimenté de façon discontinue en scories en 2. En période de fonctionnement, les scories remplissent d'abord la chambre 3 terminée en 4 par une paroi transversale, un passage permanent étant toutefois ménagé en 5 sous la paroi 4.

Dans la chambre 3, les scories sont soumises à l'action d'un arc électrique, mono ou polyphasé 6, ou éventuellement continu, sous apport de produits carbonés 7, tels que par exemple du du charbon, ceux-ci pouvant être accompagnés de porteurs de silice et d'alumine.

Ayant déjà subi un premier traitement, les scories 8 se dirigent par 5 dans une seconde chambre 9 où s'effectue une opération analogue à celle réalisée dans la chambre 3. On peut y observer un dispositif générateur d'arc électrique 10, un apport d'éléments carbonés et de porteurs de silice et d'alumine 11, une paroi terminale 12, un passage inférieur 13, par où les scories 14 s'échappent après avoir subi dans la chambre 9 une deuxième phase de leur traitement de réduction. Celui-ci peut, si besoin en est, être parfait dans une troisième chambre 15.

A la partie inférieure de celle-ci se trouve une zone plus profonde 16, aménagée en entonnoir pour permettre par 17 l'évacuation du métal réduit et décanté produit dans les différentes chambres de réaction.

Le traitement des scories étant terminé, celle-ci s'échappent (flèche 18) par une ouverture 19 pratiquée au bas de la paroi 20 limitant la dernière chambre de réaction.

Quittant celle-ci, les scories pénètrent dans une chambre de décantation 21 servant de tampon à la sortie du récipient 1. Ces scories sortent de la dite chambre en continu par 22, pour être déversées dans un four Trommel 23. Un apport de porteurs de chaux peut se faire avantageusement en 24, par exemple à contre-courant de la veine de scories.

Conformément à la présente invention, il est donc possible de réaliser l'alimentation en scories du récipient métallurgique soit de façon continue, soit de façon discontinue. Il est par exemple possible de disposer entre le convertisseur dont proviennent des scories liquides et le bit récipient métallurgique, un réservoir tampon, assurant la continuité de l'alimentation du dit récipient. On peut également disposer un réservoir tampon à la sortie du récipient métallurgique pour assurer l'alimentation continue du four Trommel.

**Revendications**

1. Procédé pour valoriser les scories basiques provenant de l'affinage à l'oxygène de fonte non phosphoreuse, dans lequel on ajoute aux dites scories des porteurs d'alumine et de silice, ainsi que des éléments réducteurs, de préférence du carbone, tout en chauffant les dites scories au moyen d'un arc électrique afin d'assurer la réduction des oxydes métalliques qu'elles contiennent, caractérisé en ce que l'on assure l'écoulement continu des dites scories suivant une trajectoire prédéterminée, en ce que l'on répète au moins une fois, en des zones successives de la dite trajectoire, les dites opérations d'addition de porteurs d'alumine et de silice; d'éléments réducteurs ainsi que de chauffage et réduction, en ce qu'après la dernière opération d'addition, chauffage et réduction, on assure la décantation des métaux réduits et en ce que l'on recueille en continu les dites scories à la sortie de la dite trajectoire.

2. Procédé suivant la revendication 1, caractérisé en ce que l'on ajoute aux dites scories recueillies en continu des porteurs de chaux en quantité telle que le mélange obtenu présente une teneur en chaux comprise entre 60% et 70%.

3. Dispositif pour la mise en oeuvre du procédé suivant la revendication 1, comportant un récipient métallurgique équipé de moyens d'apport de porteurs d'alumine et de silice, de moyens d'apport d'éléments réducteurs et de moyens de chauffage des scories à l'aide d'un arc électrique, caractérisé en ce que le dit récipient est subdivisé en au moins trois chambres traversées successivement par les dites scories en écoulement continu, en ce que les parois séparant deux chambres successives sont pourvues de moyens permettant l'écoulement des scories d'une chambre vers la suivante, en ce que chacune de ces chambres, à l'exception de la dernière dans le sens d'écoulement des scories, est équipée des dits moyens d'apport de porteurs d'alumine et de silice, d'éléments réducteurs ainsi que des dits moyens de chauffage, en ce que la première chambre est en outre équipée de moyens d'introduction de scories dans le dit récipient, en ce qu'au moins une des dites chambres, à l'exception de la dernière dans le sens d'écoulement des scories, est équipée de moyens permettant l'évacuation des métaux réduits ayant décanté, et en ce que la dernière chambre est équipée de moyens permettant de soutirer en continu les dites scories.

4. Dispositif suivant la revendication 3, caractérisé en ce qu'il comprend en outre un four Trommel, faiblement incliné sur l'horizontale, et dont l'orifice d'entrée est disposé en contrebas des dits moyens de soutirage des dites scories, le dit four Trommel étant en outre équipé de moyens de chauffage des matières qu'il peut contenir.

## Patentansprüche

1. Verfahren zum Valorisieren von basischen, vom Sauerstofffrischen phosphorfreien Roheisens herrührenden Schlacken, bei welchem den genannten Schlacken Träger von Aluminiumoxid und Siliziumdioxid sowie Reduktionsmittel, vorzugsweise Kohlenstoff, zugefügt werden mit gleichzeitiger Erhitzung der genannten Schlacken mit Hilfe eines Lichtbogens, um die Reduktion der in ihnen enthaltenen Metalloxide herbeizuführen, dadurch gekennzeichne dass für einen ständigen Abfluss der genannten Schlacken auf einer vorbestimmten Bahn gesorgt wird, dass in aufeinanderfolgenden Zonen der genannten Bahn die Zugabe von Trägern von Aluminiumoxid und Siliziumdioxid und von Reduktionsmitteln sowie das Erhitzen und Reduzieren mindestens einmal wiederholt wird, dass nach der letzten Zugabe, Erhitzung und Reduktion das reduzierte Metall dekantiert wird, und dass die genannten Schlacken am Ende der genannten Bahn fortlaufend aufgefangen werden.

2. Verfahren nach Anspruch 1, dadurch gekennzeichnet, dass den fortlaufend aufgefangenen Schlacken Kalkträger in solcher Menge zugefügt werden, dass die erhaltene Mischung einen Kalkgehalt zwischen 60 und 70% aufweist.

3. Vorrichtung zur Durchführung des Verfahrens nach Anspruch 1, mit einem metallurgischen Gefäss, das eine Zuführeinrichtung für Träger von Aluminiumoxid und Siliziumdioxid, eine Einrichtung zum Zuführen von Reduktionsmitteln und eine Einrichtung zum Erhitzen der Schlacken mit Hilfe eines Lichtbogens aufweist, dadurch gekennzeichnet, dass das genannte Gefäss in mindestens drei Kammern unterteilt ist, die von den Schlacken in fortlaufendem Strom nacheinander durchlaufen werden, dass die zwei aufeinanderfolgenden Kammern voneinander trennenden Wände mit Mitteln versehen sind, die das Fliessen der Schlacken von einer Kammer in die folgende erlauben, das jede Kammer, mit Ausnahme der in Fliessrichtung der Schlacken letzten Kammer, mit der genannten Einrichtung zum Zuführen von Trägern von Aluminiumoxid und Siliziumdioxid, von Reduktionsmitteln sowie mit der genannten Heizeinrichtung ausgestattet ist, dass die erste Kammer ausserdem eine Einrichtung zum Zuführen von Schlacken in das genannte Gefäss aufweist, dass mindestens eine der genannten Kammern, mit Ausnahme der in Fliessrichtung der Schlacken letzten Kammer, mit einer Einrichtung zum Entleeren von dekantiertem reduzierten Metall versehen ist, und dass die letzte Kammer mit einer Einrichtung ausgestattet ist, die das fortlaufende Abziehen der genannten Schlacken ermöglicht.

4. Vorrichtung nach Anspruch 3, dadurch gekennzeichnet, dass ausserdem ein schwach gegen die Waagerechte geneigter Trommelofen vorgesehen ist, dessen Eintrittsöffnung sich unterhalb der genannten Einrichtung zum Abziehen der genannten Schlacken befindet, und dass der genannte Trommelofen ausserdem eine Einrichtung zum Erhitzen der in ihm enthaltenen Stoffe aufweist.

## Claims

1. A process for valorizing the basic slags originating from the oxygen refining of phosphorus-free pig iron in which the said slags receive additions of alumina and silica carriers as well as reducing elements, preferably carbon, and in which the slags are heated by electric arc so as to effect the reduction of the metal oxides which they contain, characterized by the fact that the said slags are caused to flow continuously along a predetermined path; by the fact that the aforementioned additions of alumina and silica carriers and of the reducing elements as well as the heating and reducing operations are repeated at least once in consecutive sections of the said path; by the fact that, after the final adding, heating and reducing operations, the reduced metals are separated, and by the fact that the aforementioned slags are continuously collected at the outlet of the flow path.

2. A process as described in claim 1 characterized by the fact that lime carriers are added to the continuously collected slags in such quantity that the lime content of the mixture obtained is between 60 and 70%.

3. A device for the application of the process described in claim 1, comprising a metallurgical vessel equipped with means for adding alumina and silica carriers, with means for adding reducing elements and with means for heating the slags by an electric arc, characterized by the fact that the said vessel is subdivided into at least three chambers through which the aforementioned continuously flowing slags flow successively; by the fact that the walls separating two consecutive chambers are provided with means enabling the slags to flow from one chamber into the next; by the fact that each of these chambers except the last in the direction of slag flow is equipped with the said means for adding alumina and silica carriers and reducing elements as well as with the aforementioned means for heating; by the fact that the first chamber is additionally equipped with means for introducing slags into the said vessel; by the fact that at least one of the said chambers, excluding the last in the direction of slag flow, is equipped with means for removing the separated, reduced metals, and by the fact that the final chamber is provided with means for the continuous discharge of the said slags.

4. A device as described in claim 3 characterized by the fact that it also includes a rotary furnace inclined at a slight angle to the horizontal with its feed inlet located below the level of the aforementioned slag discharge means, the said rotary furnace being additionally equipped with means for heating the materials which it may contain.

6 4  10 12  15 20  21  22  23

2

3

1

7   5 8   11   9 14 13 16 17 19 18   24

0 024 065